# EUROPÄISCHE PATENTANMELDUNG

(11) **EP 2 717 188 A1**
(43) Veröffentlichungstag der Anmeldung: **09.04.2014**
(21) Anmeldenummer: 12187446.5
(22) Anmeldetag: 05.10.2012
(51) Int. Cl.: G06F 21/36, G09G 5/00, G09G 3/20, G02B 27/22

(54) **Vorrichtung und Verfahren zur Eingabe eines persönlichen Identifikationsworts**

(71) Anmelder: Wincor Nixdorf International GmbH, 33106 Paderborn (DE)
(72) Erfinder: Nolte, Michael, 33034 Brakel (DE); Weissbrod, Holger, Dr., 33106 Paderborn (DE)
(74) Vertreter: Schröder, Christoph

(57) **Zusammenfassung**

Eine Vorrichtung (1) zur Eingabe eines persönlichen Identifikationsworts umfasst einen berührungssensitiven Bildschirm (2), der eine Anzeigefläche (20) aufweist und ausgebildet ist, ein Eingabefeld (3) zur Eingabe eines persönlichen Identifikationsworts auf der Anzeigefläche (20) anzuzeigen, und eine Steuereinrichtung (7) zum Ansteuern des Bildschirms (2) zum Anzeigen des Eingabefelds (3) auf der Anzeigefläche (2) und zum Auswerten eines über das Eingabefeld eingegebenen persönlichen Identifikationsworts. Zusätzlich ist vorgesehen, dass die Steuereinrichtung (7) ausgebildet ist, den Bildschirm (2) zum Anzeigen des Eingabefelds (3) in variabler Größe und/oder Position auf der Anzeigefläche (20) anzusteuern. Auf diese Weise wird eine Vorrichtung zur Verfügung gestellt, die eine höhere Sicherheit bei der Eingabe eines persönlichen Identifikationsworts ermöglicht.

## Beschreibung

Die Erfindung betrifft eine Vorrichtung zur Eingabe eines persönlichen Identifikationsworts nach dem Oberbegriff des Anspruchs 1 sowie ein Verfahren zur Eingabe eines persönlichen Identifikationsworts.

Eine derartige Vorrichtung umfasst einen berührungssensitiven Bildschirm und eine Steuereinrichtung zum Ansteuern des Bildschirms. Der berührungssensitive Bildschirm weist eine Anzeigefläche auf und ist ausgebildet, ein Eingabefeld zur Eingabe eines persönlichen Identifikationsworts auf der Anzeigefläche anzuzeigen. Die Steuereinrichtung steuert den Bildschirm zum Anzeigen des Eingabefeldes auf der Anzeigefläche an und wertet ein über das Eingabefeld eingegebenes persönliches Identifikationswort aus.

Eine solche Vorrichtung kann beispielsweise Bestandteil eines Geldautomaten oder eines mobilen Bezahlterminals sein, bei denen über einen Bildschirm in berührungssensitiver Weise ein persönliches Identifikationswort, beispielsweise eine persönliche Identifikationsnummer (die so genannte PIN), eingegeben wird, um einen Nutzer zu identifizieren und einen Auszahl- oder anderen Bezahlvorgang zu initiieren. So kann sich beispielsweise bei einem Geldautomat ein Nutzer über eine Scheck- oder Kreditkarte und eine PIN, authentisieren, um Geld von seinem Konto abzuheben und mittels des Geldautomaten ausgezahlt zu bekommen. Mittels eines mobilen Bezahlterminals - beispielsweise in einer Geschäftsumgebung, in einem Restaurant oder an einem anderen Ort, an dem ein Bezahlvorgang durchgeführt werden soll - kann ein Nutzer sich beispielsweise unter Verwendung einer Scheck- oder Kreditkarte durch Eingabe seines PINs identifizieren, so dass ein Bezahlvorgang zum Bezahlen einer Leistung beispielsweise durch Abbuchung von seinem Konto autorisiert werden kann.

Die Eingabe von persönlichen Identifikationsworten dieser Art ist herkömmlich mit einigem Risiko behaftet. So besteht bei herkömmlichen Geldautomaten unter Umständen die Gefahr, dass ein Dritter die Eingabe eines persönlichen Identifikationswortes ausspioniert und somit Kenntnis über das persönliche Identifikationswort erhält, so dass der Dritte unbefugt Auszahl- oder andere Bezahlvorgänge vornehmen kann, wenn er die zugeordnete Scheck- oder Kreditkarte entwendet.

Es besteht daher ein Bedürfnis nach Vorrichtungen und Verfahren zur Eingabe eines persönlichen Identifikationswortes, mit denen die Eingabe eines persönlichen Identifikationswortes möglichst sicher gestaltet werden kann.

Bei einem aus der US 2011/0018860 A1 bekannten Bildschirm sind unterschiedliche Modi vorgesehen, indem in einem Normalmodus eine erste Gruppe von Pixeln angesteuert wird, um einem Nutzer Informationen in einem vergleichsweise großen Sichtwinkel auf dem Bildschirm sichtbar zu machen, und in einem gesicherten Modus eine andere Gruppe von Pixeln angesteuert wird derart, dass Informationen auf dem Bildschirm nur innerhalb eines vergleichsweise kleinen Sichtwinkels sichtbar sind. In dem gesicherten Modus kann ein Betrachter somit nur Informationen auf dem Bildschirm erkennen, wenn er sich unmittelbar vor dem Bildschirm innerhalb des Sichtwinkels befindet. Ein Dritter, der von einer Position außerhalb des Sichtwinkels auf den Bildschirm blickt, kann hingegen die auf dem Bildschirm dargestellten Informationen nicht erkennen.

Aus der US 2011/0069080 A1 ist ein Mobiltelefon mit einem Bildschirm bekannt, der einen eingeschränkten Sichtwinkel aufweist.

Bei einem aus der US 6,252,345 B1 bekannten Bildschirm ist an einer Frontscheibe eine Beschichtung vorgesehen, in die Linsen zur Verbesserung der Helligkeit der Pixel des Bildschirms integriert sind.

Der vorliegenden Erfindung liegt die Aufgabe zugrunde, eine Vorrichtung und ein Verfahren zur Eingabe eines persönlichen Identifikationsworts zur Verfügung zu stellen, die eine höhere Sicherheit bei der Eingabe eines persönlichen Identifikationsworts ermöglichen.

Diese Aufgabe wird durch einen Gegenstand mit den Merkmalen des Anspruchs 1 gelöst.

Demnach ist die Steuereinrichtung ausgebildet, den Bildschirm zum Anzeigen des Eingabefelds in variabler Größe und/oder Position auf der Anzeigefläche anzusteuern.

Die vorliegende Erfindung geht von der grundlegenden Zielrichtung aus, einem Dritten es möglichst schwer, wenn nicht unmöglich zu machen, die Eingabe eines persönlichen Identifikationsworts, beispielsweise einer PIN, durch einen Nutzer auszuspionieren. Dies soll dabei insbesondere dann gelten, wenn Informationen auf einem Bildschirm nur innerhalb eines eingeschränkten Sichtbereichs für einen Betrachter sichtbar sind, weil der Bildschirm beispielsweise das Eingabefeld zur Eingabe eines persönlichen Identifikationsworts so anzeigt, dass das Eingabefeld nur innerhalb eines beschränkten Sichtwinkels sichtbar ist.

Mit der vorliegenden Erfindung wird eine erhöhte Sicherheit dadurch erreicht, dass das Eingabefeld auf der Anzeigefläche des Bildschirms nicht statisch immer an derselben Position mit derselben Größe, sondern dynamisch an unterschiedlichen Positionen und/oder mit unterschiedlichen Größen angezeigt wird. Dies hat den Vorteil, dass ein Dritter, der die Eingabe eines persönlichen Identifikationsworts ausspionieren will, aus einer Handbewegung und dem Ort der Berührung eines Bildschirms durch einen Nutzer nicht schließen kann, welche Eingabe der Nutzer gerade tätigt. Befindet sich der Dritte außerhalb eines eingeschränkten Sichtwinkels, innerhalb dessen das Eingabefeld sichtbar ist, kann er das Eingabefeld auf der Anzeigefläche des Bildschirms nicht sehen, und, weil das Eingabefeld variabel an unterschiedlichen Positionen und/oder mit unterschiedlichen Größen angezeigt wird, auch aus der Fingerbewegung des Nutzers nicht auf die erfolgte Eingabe zurückschließen.

Die Steuereinrichtung ist vorteilhafterweise ausgebildet, die Größe und/oder Position des Eingabefelds zufällig zu variieren. Das Eingabefeld kann hierbei mehrere berührungssensitive Tasten aufweisen, die auf der Anzeigefläche des Bildschirms angezeigt werden, wobei durch Variation der Größe und/oder Position des Eingabefelds vorteilhafterweise auch die Größe und/oder Position der Tasten des Eingabefelds in zufälliger Weise variieren.

Zudem kann vorgesehen sein, dass die Reihenfolge der Tasten (beispielsweise zur Eingabe einer PIN über die Nummerntasten 0 bis 9) variiert, so dass auch aus der relativen Bewegung zwischen einzelnen Tastendrücken nicht auf die erfolgte Eingabe zurückgeschlossen werden kann.

Das Eingabefeld kann vorteilhafterweise zur Eingabe einer PIN mit Nummerntasten ausgestaltet sein. Denkbar ist aber auch, alphanumerische Tasten, beispielsweise eine vollständige alphanumerische Tastatur, zur Eingabe eines irgendwie gearteten, beliebigen alphanumerischen persönlichen Identifikationsworts vorzusehen.

Die Variation der Größe und/oder Position des Eingabefelds kann zeitabhängig oder ereignisabhängig erfolgen. Beispielsweise kann vorgesehen sein, in bestimmten Zeitintervallen, beispielsweise alle 5 oder 10 Sekunden, das Eingabefeld in seiner Größe und/oder Position zu verändern. Alternativ oder ergänzend kann vorgesehen sein, dass nach Auftreten eines Ereignisses, beispielsweise nach Eingabe eines persönlichen Identifikationsworts durch einen Nutzer, bei Initiierung des Eingabefelds für eine Eingabe eines persönlichen Identifikationsworts, nach einem einzelnen Tastendruck, nach einer Korrektur einer Eingabe oder dergleichen die Größe und/oder Position des Eingabefelds verändert wird, so dass eine ereignisabhängige Variation erfolgt. Die zeitabhängige Variation und die ereignisabhängige Variation können hierbei miteinander kombiniert werden, indem nach bestimmten Zeitintervallen und zusätzlich nach vorbestimmten Ereignissen eine Variation des Eingabefelds erfolgt.

Grundsätzlich ist denkbar, dass sich zusammen mit der Veränderung des Eingabefelds in Größe und/oder Position auch die übrige Anordnung von auf der Anzeigefläche des Bildschirms angezeigten Inhalten und Informationen ändert. Vorteilhafterweise werden aber von dem Eingabefeld unterschiedliche Funktionstasten, beispielsweise eine "Abbruch"-Taste, eine "Korrektur"-Taste und/oder eine "Bestätigung"-Taste, die für die Eingabe eines persönlichen Identifikationsworts über numerische oder alphanumerische Tasten hinaus erforderlich sind, in unveränderlicher Position und Größe auf der Anzeigefläche angezeigt, so dass diese Funktionstasten einem Nutzer immer am selben Ort und in unveränderlicher Gestalt auf der Anzeigefläche angezeigt werden. Nur die sicherheitskritischen Tasten des Eingabefelds werden somit in ihrer Anzeige verändert. Der Bildschirm kann unterschiedliche Betriebsmodi aufweisen. So kann der Bildschirm einen gesicherten Modus, in dem auf der Anzeigefläche angezeigte Inhalte für einen Betrachter in einem ersten Sichtwinkel sichtbar sind, und einen Normalmodus, in dem auf der Anzeigefläche angezeigte Inhalte in einem im Vergleich zum ersten Sichtwinkel größeren, zweiten Sichtwinkel sichtbar sind, aufweisen. Hierunter ist zu verstehen, dass ein Betrachter Inhalte, die auf der Anzeigefläche des Bildschirms angezeigt werden, in dem gesicherten Modus nur erkennen kann, wenn er sich innerhalb des Sichtwinkels (der im dreidimensionalen Raum in der Regel einen Sichtkegel beschreibt) befindet. Ein Dritter, der von außerhalb des Sichtwinkels auf den Bildschirm schaut, kann auf der Anzeigefläche im gesicherten Modus angezeigte Inhalte nicht sehen. In dem Normalmodus gilt grundsätzlich dasselbe, wobei der im Normalmodus bereitgestellte (zweite) Sichtwinkel größer ist als der im gesicherten Modus bereitgestellte (erste) Sichtwinkel. Beispielsweise kann der zweite Sichtwinkel nahezu 180° betragen, so dass ein Betrachter auf der Anzeigefläche angezeigte Informationen erkennen kann, solange er sich nur innerhalb eines Halbraums vor dem Bildschirm befindet. Der (erste) Sichtwinkel, der dem gesicherten Modus zugeordnet ist, ist hingegen deutlich enger und kann beispielsweise zwischen 10° und 50°, beispielsweise 30° betragen, so dass in dem gesicherten Modus ein Erkennen von Inhalten auf der Anzeigefläche des Bildschirms nur innerhalb eines schmalen Sichtkegels möglich ist.

Vorzugsweise wird das Eingabefeld in dem gesicherten Modus angezeigt, so dass das Eingabefeld nur durch einen Betrachter erkennbar ist, der sich innerhalb des dem gesicherten Modus zugeordneten (schmalen) Sichtwinkels und somit unmittelbar vor der Anzeigefläche des Bildschirms befindet. Ein Dritter, der die Eingabe eines persönlichen Identifikationsworts ausspionieren will, sich dabei aber außerhalb des im gesicherten Modus bereitgestellten Sichtwinkels befindet, kann somit zwar Fingerbewegungen erkennen, sieht dabei das Eingabefeld aber nicht, so dass - aufgrund der Variation der Position und der Größe des Eingabefelds - es dem Dritten unmöglich ist, auf Buchstaben oder Zahlen des persönlichen Identifikationsworts zurückzuschließen.

In besonderer Weise zu sichern ist hauptsächlich die Eingabe des persönlichen Identifikationsworts über das Eingabefeld. Andere Bereiche der Anzeigefläche des Bildschirms hingegen müssen nicht notwendigerweise im gesicherten Modus betrieben werden, sondern können auch im Normalmodus verwendet werden, so dass Inhalte, die in einem Anzeigebereich außerhalb des Eingabefelds angezeigt werden, in dem dem Normalmodus zugeordneten (weiten) Sichtwinkel für einen Betrachter sichtbar sind.

Denkbar und vorteilhaft kann selbstverständlich auch sein, zusätzlich zum Eingabefeld ein oder mehrere andere Felder vorzusehen, die in dem gesicherten Modus angezeigt werden, beispielsweise dann, wenn in unterschiedlichen Feldern unterschiedliche möglicherweise sicherheitsrelevante Informationen einzugeben sind.

Zum Betreiben des Bildschirms in unterschiedlichen Modi kann der beispielsweise mit einer LCD-Anzeige oder LED-Anzeige ausgebildete Bildschirm eine Pixelerzeugungseinrichtung mit einer Mehrzahl von Pixeln zum pixelweisen Abstrahlen von Licht aufweisen. Den Pixeln ist hierbei eine optische Abbildungseinrichtung zugeordnet, die das von den einzelnen Pixeln abgestrahlte Licht optisch abbildet, wobei die Steuereinrichtung ausgebildet ist, im Normalmodus und im gesicherten Modus unterschiedliche Gruppen von Pixeln anzusteuern derart, dass über die optische Abbildungseinrichtung in dem gesicherten Modus Licht in dem (schmalen) ersten Sichtwinkel, der dem gesicherten Modus zugeordnet ist, und in dem normalen Modus Licht innerhalb des (weiten) zweiten Sichtwinkels, der dem Normalmodus zugeordnet ist, abgestrahlt wird.

Insbesondere kann die Pixelerzeugungseinrichtung zwei unterschiedliche Gruppen von Pixeln aufweisen. In dem gesicherten Modus wird eine erste Gruppe von Pixeln angesteuert, die so zu der optischen Abbildungseinrichtung angeordnet ist, dass Licht nur innerhalb des zugeordneten ersten Sichtwinkels abgestrahlt wird. In dem Normalmodus hingegen wird entweder ausschließlich eine von der ersten Gruppe unterschiedliche, zweite Gruppe von Pixeln oder gleichzeitig die erste Gruppe von Pixeln und die zweite Gruppe von Pixeln angesteuert, so dass im Zusammenwirken mit der optischen Abbildungseinrichtung sich eine Lichtabstrahlung innerhalb des zugeordneten zweiten Sichtwinkels ergibt.

Die optische Abbildungseinrichtung kann beispielsweise als transparentes Abdeckelement ausgebildet sein, das auf einer Scheibe des Bildschirms angebracht ist und eine Mehrzahl von optischen Linsen aufweist. Die einzelnen Pixel der unterschiedlichen Gruppen von Pixeln sind hierbei derart zu einer oder zu mehreren zugeordneten Linsen angeordnet, dass sich bei Ansteuerung eine Abstrahlung in einem vorbestimmten Sichtwinkel ergibt und mittels der Pixel entsprechend abhängig vom Modus Inhalte innerhalb unterschiedlicher Sichtwinkel abgebildet werden.

Denkbar ist, Inhalte auf der Anzeigefläche des Bildschirms mehrfarbig, beispielsweise in an sich bekannter Weise unter Verwendung von roten, grünen und blauen Pixeln, anzuzeigen. Das Eingabefeld kann in diesem Fall entweder auch mehrfarbig oder lediglich einfarbig angezeigt werden. In letzterem Fall ergibt sich eine vergleichsweise einfache technische Ausgestaltung, weil zum Anzeigen des Eingabefelds im gesicherten Modus vergleichsweise wenig Pixel angesteuert werden müssen.

Die Aufgabe wird auch durch ein Verfahren zur Eingabe eines persönlichen Identifikationsworts gelöst, bei dem
- ein berührungssensitiver Bildschirm auf einer Anzeigefläche ein Eingabefeld zur Eingabe eines persönlichen Identifikationsworts anzeigt und
- eine Steuereinrichtung den Bildschirm zum Anzeigen des Eingabefelds auf der Anzeigefläche ansteuert und ein über das Eingabefeld eingegebenes persönliches Identifikationswort auswertet.

Dabei ist vorgesehen, dass die Steuereinrichtung den Bildschirm zum Anzeigen des Eingabefelds in variabler Größe und/oder Position auf der Anzeigefläche ansteuert.

Die vorangehend für die Vorrichtung beschriebenen Vorteile und vorteilhaften Ausgestaltungen sind analog auch auf das Verfahren übertragbar, so dass auf die vorangehenden Ausführungen verwiesen werden soll.

Der der Erfindung zugrunde liegende Gedanke soll nachfolgend anhand der in den Figuren dargestellten Ausführungsbeispiele näher erläutert werden. Es zeigen:
- Fig. 1: eine schematische Ansicht einer Vorrichtung in Form eines mobilen Bezahlterminals zur Eingabe eines persönlichen Identifikationsworts;
- Fig. 2: eine schematische Ansicht einer Anzeigefläche eines Bildschirms der Vorrichtung;
- Fig. 3: eine schematische Schnittansicht eines Bildschirms; und
- Fig. 4: eine schematische Ansicht darstellend unterschiedliche Sichtwinkel, die verschiedenen Betriebsmodi des Bildschirms zugeordnet sind.

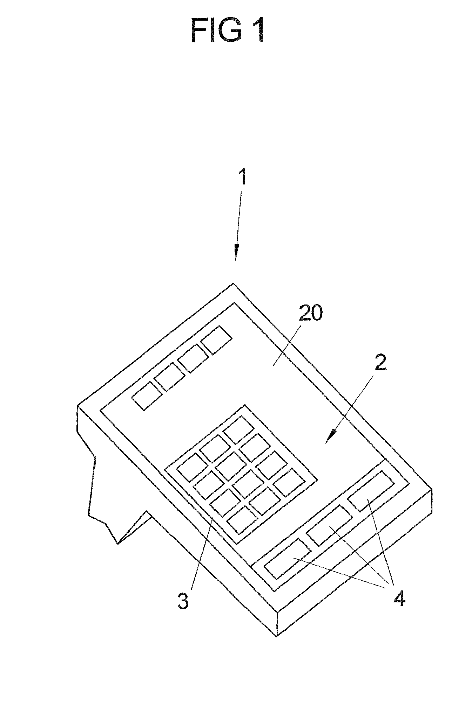

Fig. 1 zeigt eine Vorrichtung 1 zur Eingabe eines persönlichen Identifikationsworts, die einen Bildschirm 2 mit einer Anzeigefläche 20 aufweist, auf der ein Eingabefeld 3 zur Eingabe des persönlichen Identifikationsworts, beispielsweise einer persönlichen Identifikationsnummer (PIN) zusammen mit Funktionstasten 4 angezeigt ist.

Die Vorrichtung 1 ist, bei dem dargestellten Ausführungsbeispiel, als mobiles Bezahlterminal ausgebildet, das beispielsweise in einer Geschäftsumgebung an einem Ladentresen, in einer Restaurantumgebung oder in einer anderen Umgebung, in der ein Bezahlvorgang abgewickelt werden soll, zum Einsatz kommen kann. Die Vorrichtung 1 kann hierbei beispielsweise dazu ausgestaltet sein, Daten von einer Kreditkarte, einer Checkkarte oder einer anderen Karte oder Einrichtung, die zur Vornahme von Bezahlvorgängen ausgelegt ist (wie beispielsweise einem mit einem RFID-Chip versehenen Mobiltelefon), ausgestaltet sein. Mittels des auf der Anzeigefläche 2 angezeigten Eingabefeldes 3 und der gesondert von dem Eingabefeld 3 angezeigten Funktionstasten 4 kann hierbei ein Nutzer aufgefordert werden, ein persönliches Identifikationswort einzugeben, damit der Nutzer sich identifizieren und einen Bezahlvorgang autorisieren kann.

Bereits an dieser Stelle sei angemerkt, dass die hierin beschriebene Erfindung selbstverständlich nicht auf mobile Bezahlterminals beschränkt ist, sondern auch bei anderen Vorrichtungen zur Eingabe eines persönlichen Identifikationsworts zum Einsatz kommen kann, beispielsweise bei Geldautomaten oder anderen Systemen, die zur Durchführung von Bezahlvorgängen ausgestaltet sind.

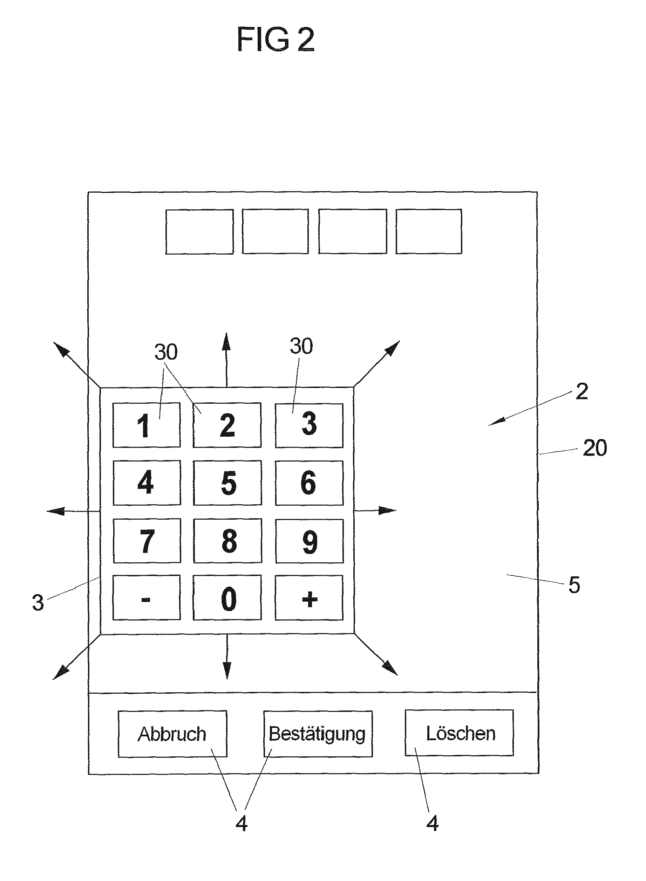

Wir in Fig. 2 dargestellt, ist auf der Anzeigefläche 20 des Bildschirms 2 ein Eingabefeld 3 neben gesondert von dem Eingabefeld 3 angeordneten Funktionstasten 4 angezeigt. Das Eingabefeld 3 weist unterschiedliche Tasten 30 auf, zu denen insbesondere Nummerntasten "0" bis "9" gehören, über die ein Nutzer eine PIN eingeben kann. Die Funktionstasten 4 dienen dazu, einen Eingabevorgang abzubrechen (Taste "Abbruch"), eine erfolgte Eingabe zu bestätigen (Taste "Bestätigung") oder eine Eingabe teilweise oder im Ganzen zu löschen (Taste "Löschen"). In an sich bekannter Weise gibt ein Nutzer zur Eingabe einer PIN zunächst eine Zahlenfolge über die Tasten 30 des Eingabefelds 3 ein, um dann die Eingabe mittels der Funktionstasten 4 zu bestätigen oder zu korrigieren. Nach erfolgter, richtiger Eingabe kann dann ein Bezahlvorgang vorgenommen oder - bei einem Geldautomaten - ein Geldbetrag ausgezahlt werden.

Im Sinne der vorliegenden Erfindung wird das Eingabefeld 3 auf der Anzeigefläche 20 mit veränderlicher Größe und Position angezeigt derart, dass die Größe und/oder Position des Eingabefelds 3 in zeitabhängiger und/oder ereignisabhängiger Weise variiert. Beispielsweise kann vorgesehen sein, dass die Größe und/oder Position des Eingabefelds 3 in regelmäßigen Zeitintervallen, beispielsweise alle 2, 5 oder 10 Sekunden, verändert wird. Ebenso kann vorgesehen sein, dass nach einem erfolgten Ereignis, beispielsweise nach erfolgter Eingabe einer PIN oder nach einem einzelnen Tastendruck die Anzeige des Eingabefelds 3 verändert wird.

Im Rahmen der Veränderung der Anzeige des Eingabefelds 3 kann die Größe und Position des Eingabefelds 3 insgesamt verändert werden. Denkbar ist hierbei, dass auch die Größe der Tasten 30 und die Position der Tasten 30 zueinander verändert werden, beispielsweise indem die Abstände zwischen den Tasten 30 variiert und auch die Anordnung der Tasten 30 relativ zueinander verändert wird.

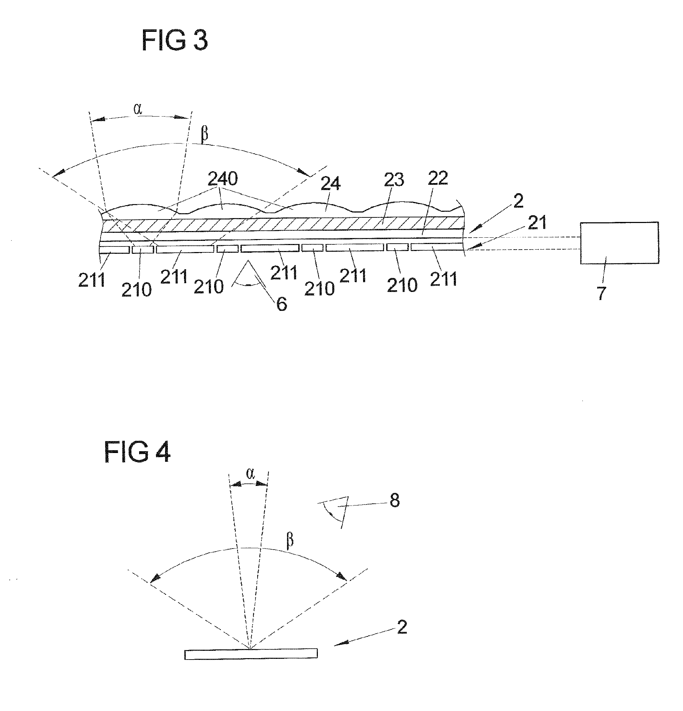

Durch Veränderung der Größe und/oder Position des Eingabefelds 3 mit seinen Tasten 30 wird es einem Dritten sehr viel schwerer gemacht, die Eingabe einer PIN durch einen Nutzer auszuspionieren. Dies gilt insbesondere dann, wenn der Bildschirm 2 in unterschiedlichen Betriebsmodi betrieben werden kann und insbesondere das Eingabefeld 3 in einem gesicherten Modus angezeigt wird derart, dass das Eingabefeld 3 für einen Betrachter 6 (siehe Fig. 4) nur dann sichtbar ist, wenn sich der Betrachter 6 innerhalb eines dem gesicherten Modus zugeordneten Sichtwinkels α vor dem Bildschirm 2 befindet. Ist das Eingabefeld 3 für den Betrachter 6 nur innerhalb des Sichtwinkels α vor dem Bildschirm 2, nicht aber für einen Dritten 8, der sich außerhalb des dem gesicherten Modus zugeordneten Sichtwinkels α befindet, sichtbar, so ist es für den Dritten 8 unmöglich, allein anhand der Fingerbewegungen des Nutzers bei der Eingabe einer PIN zu erkennen, welche PIN eingegeben wird. Der Dritte 8 kann das Eingabefeld 3 nicht sehen und kennt zudem dessen Position und Größe nicht, so dass der Dritte 8 allein aus den Fingerbewegungen eines Nutzers nicht auf eine eingegebene PIN zurückschließen kann.

Hierbei kann vorgesehen sein, dass das Eingabefeld 3 in dem gesicherten Modus angezeigt wird, so dass das Eingabefeld 3 nur innerhalb des Sichtwinkels α für einen Betrachter 6 sichtbar ist. Übrige Bereiche 5 der Anzeigefläche 2 hingegen können in einem Normalmodus angezeigt werden derart, dass in den übrigen Bereichen 5 angezeigte Informationen und Inhalte innerhalb eines im Vergleich zu dem Sichtwinkel α des gesicherten Modus größeren Sichtwinkel β (siehe Fig. 4) sichtbar sind.

Insbesondere können die Funktionstasten 4 in dem Normalmodus angezeigt werden. Diesem liegt zugrunde, dass allein die Betätigung der Funktionstasten 4 nicht sicherheitsrelevant ist, weil hieraus höchstens auf die Korrektur oder Beendigung eines Eingabevorgangs zurückgeschlossen werden kann, nicht aber auf eine eingegebene PIN.

Das Betreiben des Bildschirms 2 in unterschiedlichen Modi kann beispielsweise dadurch erfolgen, dass, wie in Fig. 3 dargestellt, mittels einer Steuereinrichtung 7 in Abhängigkeit vom verwendeten Modus unterschiedliche Gruppen von Pixeln 210, 211 einer Pixelerzeugungseinrichtung 21 des Bildschirms 2 angesteuert werden. Bei dem beispielhaften Aufbau des in Fig. 3 dargestellten Bildschirms 2 ist die Pixelerzeugungseinrichtung 21 hierbei zusammen mit einer Berührungssensoreinheit 22 an einer transparenten Scheibe 23 des Bildschirms 2 angeordnet, die auf ihrer der Pixelerzeugungseinrichtung 21 abgewandten Seite von einer optischen Abbildungseinrichtung 24 in Form einer transparenten Schicht oder Folie mit integrierten Linsen 240 überdeckt ist. Die einzelnen Pixel 210, 211 der unterschiedlichen Gruppen von Pixeln 210, 211 sind in vorbestimmter Lagebeziehung zu zugeordneten Linsen 240 der Abbildungseinrichtung 24 angeordnet derart, dass bei einer Steuerung einer ersten Gruppe von Pixeln 210 eine Lichtabstrahlung nur innerhalb des dem gesicherten Modus zugeordneten engen Sichtwinkels α, bei Ansteuerung der zweiten Gruppe von Pixeln 211 (gegebenenfalls bei gleichzeitiger Ansteuerung auch der ersten Gruppe von Pixeln 210) hingegen in dem dem normalen Modus zugeordneten weiten Sichtwinkel β erfolgt.

Der Bildschirm 2 kann beispielsweise eine Flüssigkristallanzeige (LCD-Display) verwenden. Die unterschiedlichen Pixel 210, 211 sind entsprechend durch die Flüssigkristallanzeige verwirklicht.

Ebenso ist denkbar, den Bildschirm 2 durch eine LED-Anzeige zu verwirklichen, bei der die einzelnen Pixel 210, 211 durch Leuchtdioden (LEDs) verwirklicht sind.

Der Bildschirm 2 wird zum Anzeigen des Eingabefelds 3 in dem gesicherten Modus einerseits und zum Anzeigen der übrigen Bereiche der Anzeigenfläche 20 in dem normalen Modus andererseits in den unterschiedlichen Betriebsmodi gleichzeitig betrieben, wobei unterschiedliche Bereiche der Anzeigefläche 20 mit unterschiedlichen Modi angezeigt werden.

Denkbar ist selbstverständlich auch, den Bildschirm 2 in zeitlich variabler Weise entweder im gesicherten Modus oder im Normalmodus zu betreiben, so dass die gesamte Anzeigefläche 20 zu einem Zeitpunkt im gesicherten Modus (zum Anzeigen des Eingabefelds 3) und zu einem anderen Zeitpunkt (zu dem das Eingabefeld 3 nicht angezeigt werden soll) im normalen Modus angezeigt wird.

Die optische Abbildungseinrichtung 24 bildet unterschiedliche Linsen 240 aus, die in fester Lagebeziehung zu den Pixeln 210, 211 der Pixelerzeugungseinrichtung 21 angeordnet sind. Die optische Abbildungseinrichtung 24 kann hierbei beispielsweise durch eine Folie, in die die Linsen 240 integriert sind, verwirklicht sein. Denkbar ist auch, die Abbildungseinrichtung 24 als Beschichtung auf die Scheibe 23 aufzubringen, beispielsweise ähnlich wie dies in der US 6,252,345 B1 beschrieben ist.

Die Anzeige auf der Anzeigefläche 20 in dem Normalmodus erfolgt vorteilhafterweise mehrfarbig, wie dies von üblichen Bildschirmen bekannt ist. Die Anzeige des Eingabefelds 3 in dem gesicherten Modus hingegen kann auch einfarbig erfolgen, was den Vorteil mit sich bringt, dass nur eine vergleichsweise geringe Anzahl von Pixeln 210 angesteuert werden muss, um das Eingabefeld 3 in veränderlichen Größen und Positionen auf der Anzeigefläche 20 anzuzeigen.

Im Vergleich zu üblichen Vorrichtungen, wie sie beispielsweise bei Geldautomaten verwendet werden, wird mittels des berührungssensitiven Bildschirms 2 lediglich ein virtuelles Eingabefeld 3 zum Eingeben einer PIN geschaffen, das in Größe und Position veränderlich ist, um auf diese Weise das Ausspionieren einer PIN-Eingabe für einen Dritten möglichst schwierig zu machen. Die Berührungssensoreinheit 22 kann hierbei ausgestaltet sein, um in an sich bekannter Weise beispielsweise kapazitiv eine Berührung an einem bestimmten Ort zu erkennen, um anhand dieser Berührung die Betätigung einer Taste 30, 4 auf der Anzeigenfläche 20 zu erfassen. Die Auswertung erfolgt durch die Steuereinrichtung 7, die die Pixelerzeugungseinrichtung 21 ansteuert und alle über die Anzeigefläche 20 getätigten Eingaben verarbeitet.

Der der Erfindung zugrunde liegende Gedanke ist nicht auf die vorangehend geschilderten Ausführungsbeispiele beschränkt, sondern lässt sich auch bei gänzlich anders gearteten Ausführungsformen verwirklichen.

Insbesondere ist, wie bereits gesagt, die Erfindung nicht auf mobile Bezahlterminals beschränkt, sondern kann in analoger Weise auch bei stationären Terminals, beispielsweise an Geldautomaten, an Fahrkartenautomaten oder an anderen Terminals zum Einsatz kommen.

Zudem ist die Erfindung nicht auf die Eingabe von PINs beschränkt, sondern kann auch auf Vorrichtungen zur Eingabe von alphanumerischen Identifikationsworten angewendet werden, bei denen aus Buchstaben und Ziffern bestehende Wörter zur Identifizierung einzugeben sind.

### Bezugszeichenliste

- 1: Vorrichtung
- 2: Bildschirm
- 20: Anzeigefläche
- 21: Pixelerzeugungseinrichtung
- 210, 211: Pixel
- 22: Berührungssensoreinheit
- 23: Scheibe
- 24: Abbildungseinrichtung
- 240: Linsen
- 3: Eingabefeld
- 30: Tasten
- 4: Funktionstasten
- 5: Anzeigebereich
- 6: Betrachter
- 7: Steuereinrichtung
- 8: Dritter
- α, β: Sichtwinkel

## Patentansprüche

1. Vorrichtung (1) zur Eingabe eines persönlichen Identifikationsworts, mit
- einem berührungssensitiven Bildschirm (2), der eine Anzeigefläche (20) aufweist und ausgebildet ist, ein Eingabefeld (3) zur Eingabe eines persönlichen Identifikationsworts auf der Anzeigefläche (20) anzuzeigen, und
- einer Steuereinrichtung (7) zum Ansteuern des Bildschirms (2) zum Anzeigen des Eingabefelds (3) auf der Anzeigefläche (2) und zum Auswerten eines über das Eingabefeld eingegebenen persönlichen Identifikationsworts,
**dadurch gekennzeichnet,**
**dass** die Steuereinrichtung (7) ausgebildet ist, den Bildschirm (2) zum Anzeigen des Eingabefelds (3) in variabler Größe und/oder Position auf der Anzeigefläche (20) anzusteuern.

2. Vorrichtung (1) nach Anspruch 1, **dadurch gekennzeichnet, dass** die Steuereinrichtung (7) ausgebildet ist, die Größe und/oder Position des Eingabefelds (3) zufällig zu variieren.

3. Vorrichtung (1) nach Anspruch 1 oder 2, **dadurch gekennzeichnet, dass** die Steuereinrichtung (7) ausgebildet ist, die Größe und/oder Position von Tasten (30) des Eingabefelds (3) zufällig zu variieren.

4. Vorrichtung (1) nach einem der Ansprüche 1 bis 3, **dadurch gekennzeichnet, dass** die Steuereinrichtung (7) ausgebildet ist, die Größe und/oder Position zeitabhängig oder ereignisabhängig zu variieren.

5. Vorrichtung (1) nach einem der vorangehenden Ansprüche, **dadurch gekennzeichnet, dass** die Steuereinrichtung (7) ausgebildet ist, von dem Eingabefeld (3) unterschiedliche Funktionstasten (4) in unveränderlicher Position und Größe auf der Anzeigefläche (20) anzuzeigen.

6. Vorrichtung (1) nach einem der vorangehenden Ansprüche, **dadurch gekennzeichnet, dass** der Bildschirm (2) einen gesicherten Modus, in dem auf der Anzeigefläche (20) angezeigte Inhalte für einen Betrachter (6) in einem ersten Sichtwinkel (α) sichtbar sind, und einen Normalmodus, in dem auf der Anzeigefläche (20) angezeigte Inhalte in einem im Vergleich zum ersten Sichtwinkel (α) größeren, zweiten Sichtwinkel (β) sichtbar sind, aufweist.

7. Vorrichtung (1) nach Anspruch 6, **dadurch gekennzeichnet, dass** das Eingabefeld (3) in dem gesicherten Modus angezeigt wird.

8. Vorrichtung (1) nach Anspruch 6 oder 7, **dadurch gekennzeichnet, dass** zumindest ein von dem Eingabefeld (3) unterschiedlicher Anzeigebereich (5) in dem Normalmodus angezeigt wird.

9. Vorrichtung (1) nach einem der vorangehenden Ansprüche, **dadurch gekennzeichnet, dass** der Bildschirm (2) eine Pixelerzeugungseinrichtung (21) mit einer Mehrzahl von Pixeln (210, 211) zum pixelweisen Abstrahlen von Licht und eine optische Abbildungseinrichtung (24) zum optischen Abbilden des abgestrahlten Lichts aufweist, wobei die Steuereinrichtung (7) ausgebildet ist, im Normalmodus und im gesicherten Modus unterschiedliche Gruppen von Pixel (210, 211) anzusteuern.

10. Vorrichtung (1) nach Anspruch 9, **dadurch gekennzeichnet, dass** die Pixelerzeugungseinrichtung (21) eine erste Gruppe von Pixeln (210) und eine von der ersten Gruppe unterschiedliche, zweite Gruppe von Pixeln (211) aufweist, wobei in dem gesicherten Modus die erste Gruppe von Pixeln (210) und in dem Normalmodus ausschließlich die zweite Gruppe von Pixeln (211) oder die erste Gruppe von Pixeln (210) und die zweite Gruppe von Pixeln (211) angesteuert werden.

11. Vorrichtung (1) nach Anspruch 9 oder 10, **dadurch gekennzeichnet, dass** die Abbildungseinrichtung (24) als auf einer Scheibe des Bildschirms (2) angebrachtes transparentes Abdeckelement ausgebildet ist, das eine Mehrzahl von optischen Linsen (240) aufweist.

12. Vorrichtung (1) nach einem der vorangehenden Ansprüche, **dadurch gekennzeichnet, dass** das Eingabefeld (3) einfarbig angezeigt wird.

13. Verfahren (1) zur Eingabe eines persönlichen Identifikationsworts, bei dem
- ein berührungssensitiver Bildschirm (2) auf einer Anzeigefläche (20) ein Eingabefeld (3) zur Eingabe eines persönlichen Identifikationsworts anzeigt und
- eine Steuereinrichtung (7) den Bildschirm (2) zum Anzeigen des Eingabefelds (3) auf der Anzeigefläche (2) ansteuert und ein über das Eingabefeld eingegebenes persönliches Identifikationswort auswertet,
**dadurch gekennzeichnet,**
**dass** die Steuereinrichtung (7) den Bildschirm (2) zum Anzeigen des Eingabefelds (3) in variabler Größe und/oder Position auf der Anzeigefläche (20) ansteuert.
